# EUROPÄISCHE PATENTSCHRIFT

(11) **EP 0 603 632 B1**
(45) Veröffentlichungstag und Bekanntmachung des Hinweises auf die Patenterteilung: **13.09.2000**
(21) Anmeldenummer: 93119693.5
(22) Anmeldetag: 07.12.1993
(51) Int. Cl.: G06F 9/45, G06F 9/42

(54) **Verfahren zur Steuerung einer Prozessoreinrichtung**
Method for controlling a processor device
Procédé pour la commande pour un arrangement de processeurs

(30) Priorität: 23.12.1992 DE 4243871
(43) Veröffentlichungstag der Anmeldung: 29.06.1994
(73) Patentinhaber: SIEMENS AKTIENGESELLSCHAFT, 80333 München (DE)
(72) Erfinder: Leimkötter, Ulrich, Dipl.-Ing., D-45888 Gelsenkirchen (DE); Busch, Gerd, Dipl.-Ing., D-44801 Bochum (DE)

(56) Entgegenhaltungen:
- EP-A- 0 474 425
- DE-A- 2 446 245
- US-A- 5 261 101
- PROCEEDINGS : 1987 IEEE INTERNATIONAL CONFERENCE ON COMPUTER DESIGN : VLSI IN COMPUTERS & PROCESSORS, 5. Oktober 1987, NEW YORK Seiten 549 - 557 J.LETZ ET AL. 'Living with RISC : Software Issues in the Regulus Architecture'
- PATENT ABSTRACTS OF JAPAN vol. 14, no. 283 (P-1063) 19. Juni 1990 & JP-A-02 083 623 (KOIKE TSUNEO) 23. März 1990
- PATENT ABSTRACTS OF JAPAN vol. 7, no. 260 (P-237) (1405) 18. November 1983 & JP-A-58 142 449 (HITACHI) 24. August 1983

## Beschreibung

Bei bekannten Prozessoreinrichtungen, z. B. Mikroprozessoren der Familie Siemens SAB8086, sind zur Adressierung von Speicherzellen eines Speichers jeweils wenigstens zwei prozessorinterne Register relevant. Die physikalische Adresse, also der an den Adreßleitungen eines Mikroprozessors durch digitale Pegelwert repräsentierte binäre Adreßwert wird von diesen Mikroprozessoren durch eine additive Verknüpfung der in diesen prozessorinternen Registern gespeicherten Binärwerte ermittelt.

Da diese Register im allgemeinen eine, dem Datenbusformat des Mikroprozessors entsprechende Bitbreite aufweisen (z. B. 16 Bit) und zur Bestimmung der physikalischen Adresse eine größere Bitbreite erforderlich ist (z. B. 20 Bit) wird für die additive Verknüpfung eines der Register, das als Segmentregister bezeichnet wird, gegenüber dem anderen Register, das als Aufsatzregister bezeichnet wird, in seinem Stellenwert um die zum Erreichen der für die physikalische Adresse nötigen Bitbreite erforderlichen Stellen (z. B. 4 Bit) in Richtung höherwertiger Stellen verschoben.

Diese Art einer physikalischen Adressenerzeugung kann in der Weise verstanden werden, daß der Inhalt des Segmentregisters die Anfangsadresse für einen Speicherbereich - Segment genannt - (z. B. mit 64K Adressen) im adressierbaren Adreßbereich darstellt und der Inhalt des Aufsatzregisters die Adresse einer Speicherzelle in dem betreffenden Segment darstellt.

Prinzipiell besteht zwischen einer Adressierung einer Speicherzelle, die Daten enthält, und einer Adressierung einer Speicherzelle, die Programmcode enthält, kein Unterschied; jedoch sind für die Daten- und Programmcodeadressierung jeweils individuelle Register vorgesehen.

Eine Neueinstellung des Segmentregisters ist verständlicherweise nur dann erforderlich, wenn sich eine neu einzustellende physikalische Adresse außerhalb des durch den momentanen Inhalt des Segmentregisters ausgewählten Segmentes befindet. Deshalb stehen sowohl für die Daten- als auch für die Programmcodeadressierung, wobei letztere im Hinblick auf die Segmentregistereinstellung insbesondere bei Programmsprüngen von Interesse ist, unterschiedlich Befehle an den Mikroprozessor zur Verfügung, je nachdem, ob bei der Adressierung das Segmentregister unverändert bleiben soll, oder ob ein neuer Wert eingespeichert werden muß.

Nähere Details zur Architektur und zu Adressierungsmechanismen der genannten Prozessorfamilie sind der einschlägigen Fachliteratur, z. B. MCS-86 SAB-8086 Family, User's Manual, Oktober 79, Siemens AG, zu entnehmen.

Bei der Bezeichnung von Programmsprunganweisungen werden entsprechende Befehle (z. B. Call, JMP, RET) als 'NAH' bezeichnet, wenn das Segmentregister nicht verändert werden soll, als 'FERN' werden die Befehle bezeichnet, wenn eine Veränderung des Segmentregisters bei der Ausführung der Sprunganweisung vorzunehmen ist.

Diese Unterscheidung ist insbesondere auch für eine Programmkompilierung mittels eines Hochsprachenkompilers - der für eine professionelle Programmerstellung üblicherweise verwendet wird - von Bedeutung. Der Grundsatz, wonach größere Programmsysteme in modulare Einheiten unterteilt sein sollten, führt zur Erstellung einer Vielzahl von Programmodulen, die jeweils Sprunganweisungen (insbesondere "Call"-Anweisungen) zu anderen Programmodulen enthalten und dem Mikroprozessor zur (zwischenzeitlichen) Ausführung eines anderen Programmoduls veranlassen, um danach wieder die Ausführung des ursprünglichen Programmoduls, also desjenigen Programmoduls, von dem die Sprunganweisung ausging, fortzusetzen.

Bei einer Kompilierung eines Systemprogramms, das von einem Mikroprozessor der eingangs genannten Art abgearbeitet werden soll, muß an der Kompiliereinrichtung in Abhängigkeit davon, ob sämtliche Programmodule des Systemprogramms in einem Speichersegment gespeichert werden, eingestellt sein, ob für Programmsprünge zwischen den Programmodulen 'NAH'-oder 'FERN'-Sprunganweisungen verwendet werden sollen. Eine vorgenommene Einstellung gilt dann für alle derartigen Programmsprünge im Systemprogramm.

Aufgabe der vorliegenden Erfindung ist es, die Prozessoreinrichtung so zu steuern, daß die Programmodule eines Systemprogrammes mit der Einstellung 'NAH' kompiliert werden können, obwohl die Programmodule in verschiedenen Segmenten gespeichert werden.

Gelöst wird die Aufgabe erfindungsgemäß durch die Merkmale des Patentanspruchs 1.

Vorteilhafte Weiterbildungen der Erfindung sind in den Unteransprüchen angegeben.

Zum besseren Verständnis der Erfindung wird im folgenden noch etwas detaillierter auf die Probleme bei der Kompilierung eingegangen.

Bei der Kompilierung werden die zur Bildung eines Programmsystems erforderlichen Programmodule aus einer Programmbibliothek entnommen, und eine Umsetzung der in Form von mnemotechnischen Anweisungen vorliegenden Programme in Maschinencode durchgeführt. Im Falle von Programmsprunganweisungen, die zu anderen Programmodulen führen, d. h. die zur Abarbeitung eines anderen Programmoduls führen, fehlt der Kompiliereinrichtung die Information darüber, ob die beiden Programmodule, also das Ausgangsprogrammodul und das Zielprogrammodul im gleichen Segment gespeichert sind oder nicht.

Diese Information ist für die Kompiliereinrichtung insbesondere wichtig, da Sprunganweisungen (JMP, CALL, RET) zu anderen Segmenten einen erheblich längeren Maschinencode aufweisen als Sprunganweisungen zu Programmodulen im gleichen Segment.

Die bekannten Kompiliereinrichtungen erwarten deshalb eine Aussage, d. h. eine Einstellung, ob Programmsprunganweisungen, die zu anderen Programmodulen führen als 'NAH' oder 'FERN' verstanden werden sollen; wobei die Einstellung dann pauschal für alle Programmodule bzw. für alle Sprunganweisungen zwischen den Programmodulen des gesamten Programmsystems gilt. Eine selektive Einstellung ist nicht vorgesehen.

Üblicherweise wird, sofern der Speicherbedarf für die Summe aller Programmodule des Speicherbereichs eines Segmentes nicht überschreitet, die Einstellung 'NAH' und sofern der Speicherbedarf des Speicherbereichs eines Segmentes überschreitet, die Einstellung 'FERN' vorgenommen.

Bekanntlich sind mit der Einstellung 'FERN' gewisse Nachteile, wie ein längerer Programmcode und eine längere Ausführungszeit für Sprunganweisungen verbunden.

Ganz besonders in Fällen, in denen der Speicherbereich eines Segmentes gerade nicht mehr ausreicht, um alle Programmodule aufzunehmen, bringt die 'FERN'-Einstellung mit sich, daß bei den meisten Sprunganweisungen zwischen den Programmodulen das Segmentregister unnötigerweise neu geladen wird.

An dieser Stelle setzt nun die Erfindung ein.

Um die oben angegebenen Nachteile der 'FERN'-Einstellung zu vermeiden, wird von Programmodulen ausgegangen, die mit der 'NAH'-Einstellung kompiliert werden, ungeachtet der Tatsache, daß der Speicherbereich eines Segmentes nicht ausreicht, um alle Programmodule zu speichern.

Für einen der Kompilierung nachfolgenden Bindevorgang der Programmodule wird eine Zuordnung von Programmodulen zu Segmenten vorgenommen, mit der festgelegt wird, welche Programmodule zusammen in einem jeweiligen Segment gespeichert werden. Dabei muß sichergestellt sein, daß die in einem Segment zugeordneten Programmodule den Speicherbereich eines Segmentes nicht überschreiten.

Die einem jeweiligen Segment zugeordneten Programmodule werden bei dem Bindevorgang zusammengesetzt, wobei im Maschinencode von Sprunganweisungen die Adressendifferenz zum Zielprogrammodul eingetragen wird. Bei Sprunganweisungen, die nicht "befriedigt" werden können, weil das Zielprogrammodul nicht dem Segment zugeordnet ist, in dem das Ausgangsprogrammodul sich befindet, wird in dem Maschinencode der betreffenden Sprunganweisung die Adressendifferenz zu einer, das Zielprogrammodul repräsentierenden Adresse, die von keinem der Programmodule belegt wird, eingetragen.

Was die Programmodule an sich betrifft, wird der Maschinencode nach diesem Bindevorgang unverändert in dem Speicher, d. h. in den vorgesehenen Segmenten des Speichers hinterlegt.

An die Stelle von Zielprogrammen repräsentierenden Adressen wird im Speicher eine Umsteigesteuersequenz eingefügt, die eine 'FERN'-Sprunganweisung aufweist, die das Segmentregister auf die Adresse des Segmentes einstellt, in dem das Zielprogrammodul gespeichert ist.

Das Aufsatzregister wird dabei auf eine Adresse eingestellt, an der im Speicher eine Einsteigesteuersequenz eingefügt ist, die eine 'NAH'-Sprunganweisung zum Zielprogrammodul aufweist.

Für weitere detailliertere Angaben, insbesondere hinsichtlich der Steuerungsschritte, die erforderlich sind, um einen Rücksprung nach Abarbeitung des Zielprogrammoduls zu implementieren, wird auf das nachfolgende Ausführungsbeispiel verwiesen.

Der Vorteil dieser Art von Steuerung eines Mikroprozessors besteht darin, daß trotz eines segmentüberschreitenden Speicherbedarfs der Programmodule, bei deren Kompilierung die Einstellung 'NAH' vorgenommen werden kann. Obwohl zusätzlich zu den Programmodulen eines Segmentes je eine Einsteige- und eine Umsteigesteuersequenz erforderlich ist, kann der Speicherbedarf bei einer Implementierung des erfindungsgemäßen Steuerungsverfahrens des Mikroprozessors mit ca. 30% weniger Speicherzellen veranschlagt werden, als für Programmodule, die mit der Einstellung 'FERN' kompiliert werden.

Wie bereits erwähnt, weisen die bekannten Mikroprozessoren auch bei der Adressierung von Daten eine segmentorientierte Adressenbildung auf, für die jedoch andere Register, nämlich ein Datensegmentregister und wenigstens ein Datenaufsatzregister zur Verfügung stehen. Bei der 'NAH'-Einstellung an der Kompiliereinrichtung wird von dieser unterstellt, daß nicht nur der Programmspeicherbedarf, sondern auch der Datenspeicherbedarf des zu kompilierenden Systemprogrammes jeweils den Speicherbereich eines Segmentes nicht überschreitet. Damit werden bei Datenzugriffsanweisungen im Systemprogramm prinzipiell keine Änderungen des Datensegmentregisters vorgenommen.

Sofern für ein Systemprogramm, das aus mehreren Programmsegmenten besteht, für deren Abarbeitung der Mikroprozessor erfindungsgemäß gesteuert wird, ein Segment als Datenspeicherbereich ausreicht, kann den Programmodulen der einzelnen Programmsegmente ein gemeinsames Datensegment zugeordnet werden.

Im Regelfall reicht jedoch ein Datensegment für das gesamte Systemprogramm nicht aus, so daß wenigstens zwei Datensegmente vorgesehen sein müssen, wobei den Programmodulen eines jeweiligen Programmsegmentes aufgrund der 'NAH'-Einstellung der Kompiliereinrichtung nur eines der Datensegmente zugeordnet werden kann. Beim Kompiliervorgang der Programmodule eines jeweiligen Programmsegmentes wird vorausgesetzt, daß das Datensegmentregister zu Beginn der Programmabarbeitung jeweils auf die Adresse des dem betreffenden Programmsegment zugeordneten Datensegmentes eingestellt wird.

Die Aufgabe einer vorteilhaften Weiterbildung - Anspruch 4 - des erfindungsgemäßen Steuerungsverfahrens besteht darin, bei einem Programmsprung von einem Ausgangsprogrammodul eines ersten Programmsegmentes in ein Zielprogrammodul eines zweiten Programmsegmentes eine Umschaltung des Datensegmentregisters vorzunehmen, sofern dem Zielprogrammodul ein anderes Datensegment zugeordnet ist, als dem Ausgangsprogrammodul.

Zu berücksichtigen ist dabei zudem, daß bei der 'NAH'-Einstellung an der Kompiliereinrichtung ein Kellerspeichersegment (Stack-Segment) eingerichtet wird, das die gleiche Adresse aufweist wie das Datenspeichersegment, weshalb das Daten- und das Kellerspeichersegmentregister von der Kompiliereinrichtung auf die gleiche Adresse eingestellt werden.

Mit den im Anspruch 4 angegebenen Verfahrensschritten wird diese Aufgabe gelöst. Zur Umschaltung des Kellerspeichersegmentes wird in den Datensegmenten jeweils an reservierter Stelle ein Hilfskellerspeicherbereich eingerichtet, wobei in den Hilfskellerspeicherbereich des dem Zielprogrammodul zugeordneten Datensegmentes die zuletzt im Kellerspeichersegment hinterlegten Programmübergabeparameter kopiert werden. Für die Zeitdauer, in der Anweisungen des Zielprogrammoduls ausgeführt werden, wird der Hilfskellerspeicherbereich zum Kellerspeicher, da die Adresse des das Zielprogrammodul beinhaltenden Datensegmentes in das Kellerspeichersegmentregister gespeichert wird.

Berücksichtigt werden muß insbesondere, daß in Zielprogrammodulen Sprunganweisungen zu einem weiteren Zielprogrammodul enthalten sein können, das nicht dem gleichen Programmsegment zugeordnet ist und für das dann in dem Hilfskellerspeicherbereich des ihm zugeordneten Datensegmentes die zuletzt in dem bis dahin gültigen Kellerspeichersegment hinterlegten Programmübergabeparameter kopiert werden, bevor die Sprunganweisung zu dem weiteren Zielprogrammodul ausgeführt wird.

So können in dem Hilfskellerspeicherbereich eines jeweiligen Datensegmentes mehrere vor einem jeweiligen Programmsprung hinterlegte Blöcke von Programmübergabeparametern gespeichert werden, je nachdem, wie groß die momentane sogenannte "Schachtelungstiefe" ist.

Ein Rücksprung aus einem Zielprogrammodul führt wieder in die Einsteigesteuersequenz, von der dann die Adreßwerte im Daten- und Kellerspeichersegmentregister wieder eingestellt werden, die vor Beginn der Ausführung der Anweisungen der Einsteigesteuersequenz eingestellt waren.

Besonders effektiv läßt sich der Steuerungsaufwand in der Einsteigesteuersequenz implementieren, wenn insgesamt nur zwei Datensegmente vorgesehen sind. In diesem Fall können zur Steuerung erforderliche Speicherzellen in einer Überlappung der Datensegmente hinterlegt werden, so daß diese Speicherzellen von beiden Datensegmenten aus adressierbar sind, ohne jeweils das Datensegmentregister neu einstellen zu müssen.

Anhand der Zeichnung wird im folgenden ein Ausführungsbeispiel der Erfindung näher erläutert.

Dabei zeigen:
- Fig 1: eine stark abstrahierte Darstellung zur Veranschaulichung der Steuerung des Mikroprozessors bei einem Programmsprung in ein anderes Segment,
- Fig 2: eine stark abstrahierte Darstellung zur Veranschaulichung der Steuerung des Mikroprozessors bei einem Rücksprung,
- Fig 3: ein Assemblerlisting für eine Einsteige- und eine Umsteigesteuersequenz ohne Datensegmentwechsel,
- Fig 4a,b: ein Flußdiagramm mit den für eine Zuordnung des Datensegmentes relevanten Steuerungsschritten in der Einsteigesteuersequenz,
- Fig 5: eine stark abstrahierte Darstellung der Hilfskellerspeicherbereiche in den Datensegmenten,
- Fig 6a,b: ein Assemblerlisting für eine Einsteigesteuersequenz mit Datensegmentwechsel.

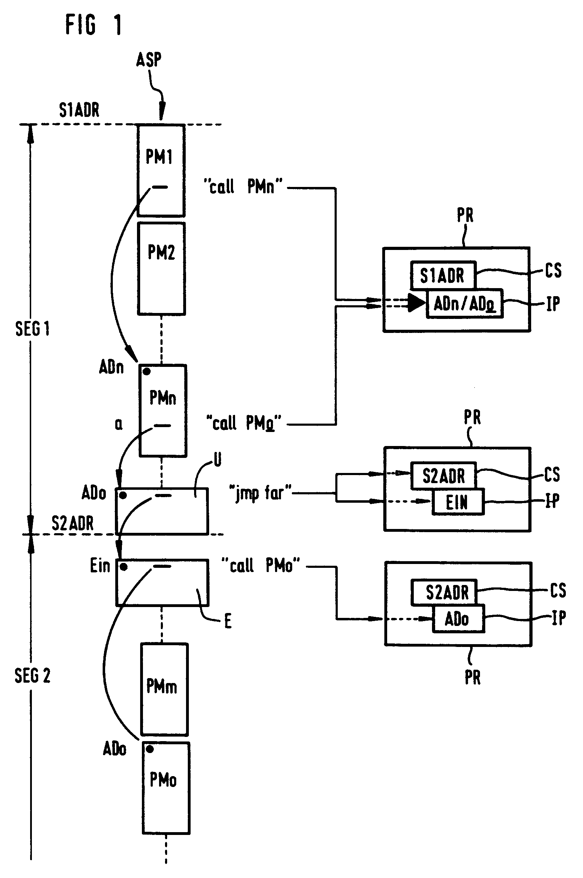

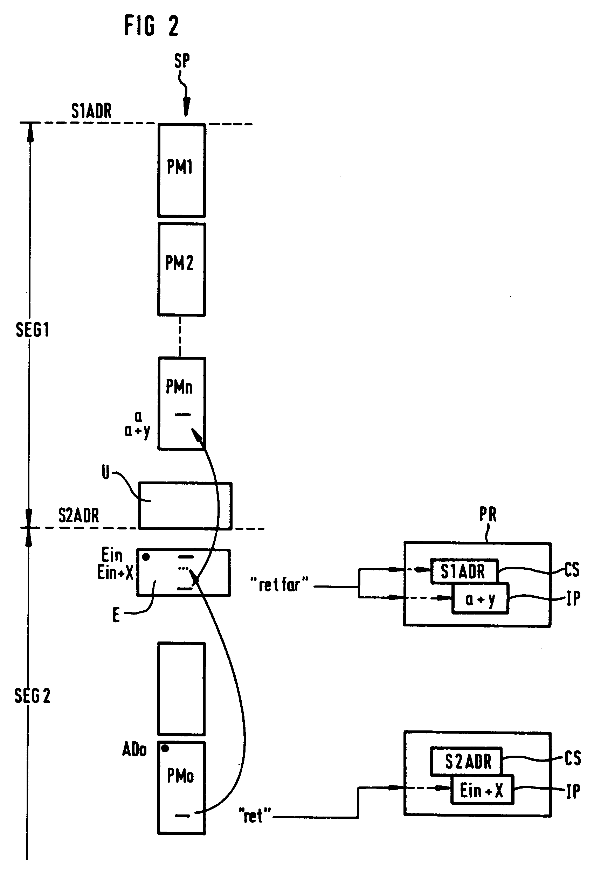

In den Figuren 1 und 2 sind Programmodule PM1, .., PMn und Programmodule PMm, PMo symbolisch dargestellt, die in einem ersten Programmspeichersegment SEG1 bzw. in einem zweiten Programmspeichersegment SEG2 des adressierbaren Speicherbereiches ASP gespeichert sind. Die Anfangsadresse des ersten Programmspeichersegmentes SEG1 ist mit S1ADR und die des zweiten Programmspeichersegmentes SEG2 mit S2ADR bezeichnet. An der unteren Grenze des ersten Programmspeichersegmentes SEG1 ist eine Umsteigesteuersequenz U und am oberen Ende des zweiten Programmspeichersegmentes SEG2 ist eine Einsteigesteuersequenz E gespeichert.

Auf der rechten Hälfte der Figur sind stark symbolisiert das Programm-Segmentregister CS und das Programm-Aufsatzregister IP eines Mikroprozessors PR dargestellt, wobei die Inhalte dieser beiden Register durch Sprunganweisungen unterschiedlich verändert werden.

Es sei an dieser Stelle bemerkt, daß die Erfindung nicht auf einer Verteilung der Programmodule auf zwei Segmente beschränkt ist, und im Ausführungsbeispiel zur Vermeidung von Redundanz lediglich ein Programmsprung von einem Ausgangsprogrammodul eines ersten Programmspeichersegmentes SEG1 in ein Zielprogrammodul eines zweiten Programmspeichersegmentes SEG2 beschrieben wird. (Die Programmspeichersegmente werden abgekürzt auch als Programmsegmente bezeichnet.) Selbstverständlich können im zweiten oder in einem dritten Programmspeichersegment auch Programmsprünge in das erste Programmspeichersegment SEG1 vorhanden sein, wobei dann das zweite bzw. dritte Programmspeichersegment auch eine Umsteigesteuersequenz U und das erste Programmsegment SEG1 auch eine Einsteigesteuersequenz E aufweisen

Die Programmodule PM1, .., PMo sind von einer Kompiliereinrichtung kompiliert worden, und beim Bindevorgang wurden die Programmodule PM1, .., PMn dem ersten Programmspeichersegment SEG1 und die Programmodule PMm, PMo dem zweiten Programmspeichersegment SEG2 zugeordnet. Das Programmodul PMn weist einen Programmsprung zum Programmodul PMo auf, wobei beim Bindevorgang die Sprunganweisung auf eine das Programmmodul PMo repräsentierende Adresse ADo in der Umsteigosteuersequenz U gerichtet wird.

Bei der Ausführung des sich aus allen Programmodulen PM1, .., PMo zusammensetzenden Systemprogrammes wird im Mikroprozessor PR bei Programmsprunganweisungen innerhalb eines Programmspeichersegmentes ( z. B. vom Programmodul PM1 aus) ausschließlich das Programm-Aufsatzregister IP verändert, also z. B. auf die Anfangsadresse ADn eines Programmodules PMn im gleichen Programmspeichersegment SEG1 eingestellt.

Bei einer Sprunganweisung in ein Programmodul PMo außerhalb des ersten Programmspeichersegmentes SEG1 wird im Mikroprozessor PR zunächst die zur Repräsentation des Zielprogrammodules PMo innerhalb des ersten Programmspeichersegmentes SEG1 vorgesehene Adresse ADo im Programm-Aufsatzregister IP eingestellt. Die Umsteigesteuersequenz U kann natürlich für mehrere repräsentierende Adressen gemeinsam zur Verfügung stehen.

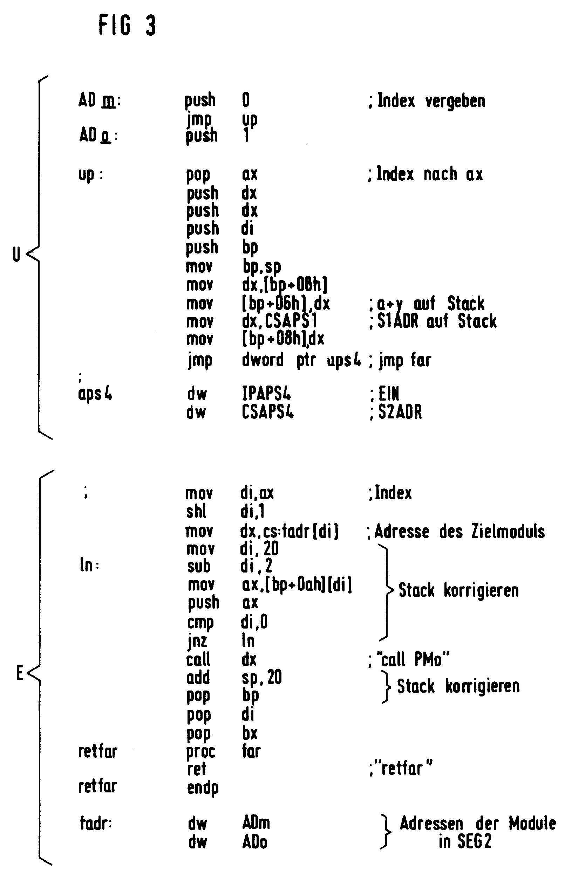

Ein Assemblerlisting für eine universelle Umsteigesteuersequenz U ist in Figur 3 angegeben. Wesentlich ist, daß in der Umsteigesteuersequenz U eine Sprunganweisung in das zweite Programmspeichersegment SEG2 vorhanden ist, bei deren Ausführung der Mikroprozessor PR im Programm-Segmentregister CS die Anfangsadresse S2ADR des zweiten Programmspeichersegmentes SEG2 und im Programm-Aufsatzregister IP die Anfangsadresse EIN der Einsteigesteuersequenz E des zweiten Programmspeichersegmentes SEG2 einstellt. Nach Adressierung dieser neu eingestellten physikalischen Adresse bezieht der Mikroprozessor PR seine Steueranweisungen aus der Einsteigesteuersequenz E.

Ein Assemblerlisting einer universellen Einsteigesteuersequenz E ist aus Figur 3 zu ersehen. Wesentlich ist, daß die Einsteigesteuersequenz E eine Sprunganweisung zum eigentlichen Zielprogrammodul PMo aufweist, mit der das Programm-Aufsatzregister IP des Mikroprozessors PR auf die Anfangsadresse ADo des Programmodules PMo eingestellt wird. Da nach einer Abarbeitung eines Zielprogrammodules im Regelfall wieder die Abarbeitung des Ausgangsprogrammodules fortgesetzt werden soll, sind die verwendeten Sprunganweisungen sogenannte "Call"-Anweisungen, bei deren Ausführungen die jeweilige Rücksprungadresse vom Mikroprozessor PR im Kellerspeicherbereich (auch "Stack" genannt) abgespeichert wird.

In Figur 2 ist die für eine solche Rückkehr erforderliche Steuerung des Mikroprozessors PR symbolisch angegeben. Nach Abarbeitung der Anweisungen im Programmodul PMo ist an letzter Stelle dieses Programmoduls PMo eine Programmsprunganweisung in Form einer Rücksprunganweisung RET hinterlegt. Bei Ausführung dieser Anweisung wird im Programm-Aufsatzregister IP des Mikroprozessors PR die Adresse EIN+x geladen, die auf die Anweisung zum Sprung in das Programmodul PMo in der Einsteigesteuersequenz E folgt. Diese Adresse bezieht der Mikroprozessor PR aus seinem Kellerspeicher ("Stack").

Am Ende der Einsteigesteuersequenz E ist eine Rücksprunganweisung vom Typ "RETFAR" hinterlegt, bei deren Ausführung das Programm-Segmentregister CS und das Programm-Aufsatzregister IP neu eingestellt werden. Beide Register CS, IP übernehmen Werte aus dem "Stack", wobei im Programm-Segmentregister CS die Anfangsadresse S1ADR des ersten Programmspeichersegmentes SEG1 und im Programmaufsatzregister IP die Adresse a+y eingestellt wird, die die Anweisung aufweist, die der Sprunganweisung im Programmodul PMn folgt. Damit kann vom Mikroprozessor PR die Abarbeitung des Programmodules PMn wieder fortgesetzt werden.

In Figur 3 ist ein Assemblerlisting jeweils für die Einsteige- und Umsteigesteuersequenz E, U, angegeben. Aufgrund der angebrachten Kommentare sollten die aufgeführten Steuerungsanweisungen für den Fachmann selbsterklärend sein.

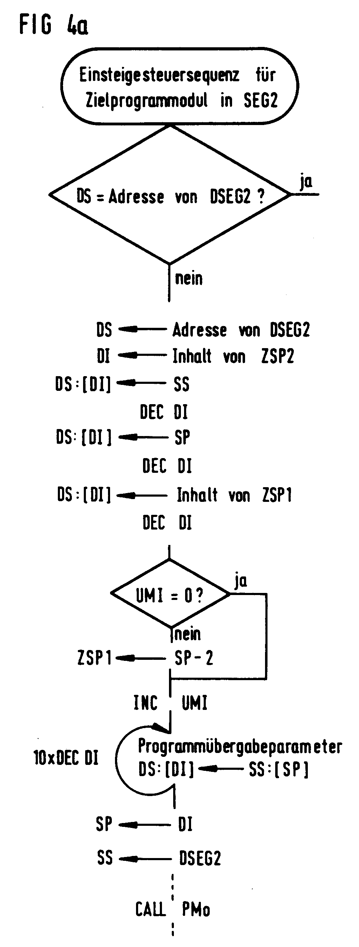

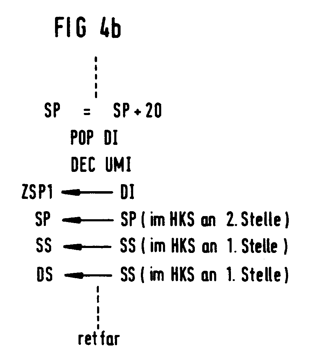

Die Figuren 4, 5 und 6 beziehen sich auf die bei einem Datensegmentwechsel nötigen Steuerungsvorgange in der Umsteigesteuersequenz E. Dabei wird zur Vereinfachung vorausgesetzt, daß das Systemprogramm nur aus einem ersten und einem zweiten Programmsegment SEG1, SEG2 besteht, und den Programmodulen PM1,...PMn des ersten Programmsegmentes SEG1 ein erstes Datensegment DSEG1 und den Programmodulen ...PMm, PMo,... des zweiten Programmsegmentes SEG2 ein zweites Datensegment DSEG2 zugeordnet ist. Bei einem Programmsprung von einem Programmodul des einen Programmsegmentes zu einem Programmodul des anderen Programmsegmentes ist dafür Sorge zu tragen, daß mit dem Wechsel des Programmsegmentes auch stets das dem jeweiligen Zielprogrammodul zugeordnete Datensegment von dem Mikroprozessor PR adressiert wird.

Zur Datenspeicheradressierung weist die Prozessoreinrichtung ein Datensegmentregister DS und mehrere Datenaufsatzregister DI, BX auf. Für eine Kellerspeicheradressierung (Stackadressierung) sind ein Kellerspeichersegmentregister SS und zwei Kellerspeicheraufsatzregister BP, SP vorgesehen, wobei das Kellerspeicheraufsatzregister SP von dem Mikroprozessor PR automatisch bei Kellerspeicheroperationen auf den aktuellen Wert des Kellerspeichers eingestellt wird.

Die für die Umschaltung des Datensegmentes erforderlichen Steuerungsvorgänge werden in der Einsteigesteuersequenz E vor Ausführung des segmentbezogenen Sprunges zum Zielprogrammodul PMo ausgeführt. Obwohl jedes der Programmsegmente SEG1, SEG2 eine eigene Einsteigesteuersequenz E aufweist, unterscheiden sich die Einsteigesteuersequenzen lediglich hinsichtlich ihrer Adreßbezüge, so daß es zur Erläuterung der Verfahrensschritte für eine Umschaltung des Datensegmentes ausreicht, auf eine der beiden Einsteigesteuersequenzen E näher einzugehen.

In Fig 4a, b sind die wesentlichen Schritte in einem Flußdiagramm dargelegt, die von der Einsteigesteuersequenz E des zweiten Programmsegmentes SEG2 veranlaßt werden.

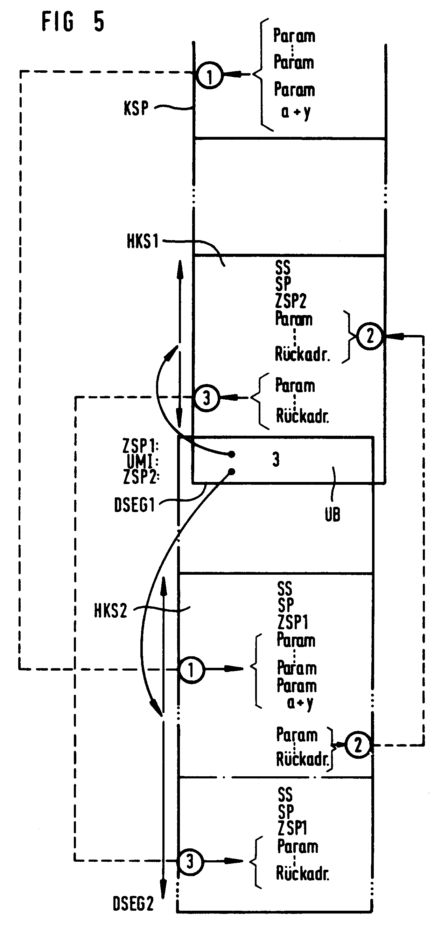

Durch Bezugnahme auf die in Fig 5 dargestellte Speicherbelegung wird das Verständnis nachfolgend erläuterter Steuerungsschritte vereinfacht.

Nach Ausführung der 'FERN'-Sprunganweisung von der Umsteigesteuersequenz U an die Anfangsadresse EIN der Einsteigesteuersequenz E wird zunächst der Inhalt des Datensegmentregisters DS auf Übereinstimmung mit der Anfangsadresse des die Einsteigesteuersequenz E beinhaltenden Datensegmentes DSEG2 überprüft. Für den Fall, daß eine Übereinstimmung vorliegt, wird umgehend wie in Zusammenhang mit den Figuren 1, 2 und 3 bereits erläutert, verfahren.

Im Falle der Nichtübereinstimmung wird die Anfangsadresse des zweiten Datensegmentes DSEG2 in das Datensegmentregister DS gespeichert. Aus einer im Überlappungsbereich UB der beiden Datensegmente DSEG1, DSEG2 hinterlegten, dem zweiten Datensegment DSEG2 zugeordneten Zeigerspeicherzelle ZSP2 wird die aktuelle Adresse eines im zweiten Datensegment DSEG2 bereitgestellten Hilfskellerspeicherbereiches HKS2 ausgelesen und in das Datenaufsatzregister DI gespeichert. In die durch das Datensegmentregister DS und das Datenaufsatzregister DI bezeichnete Adresse - das ist die erste freie Speicherzelle im Hilfskellerspeicherbereich HKS2 - wird der Inhalt des Kellerspeichersegmentregisters SS und an der nächsten Adresse der Inhalt des Kellerspeicheraufsatzregisters SP hinterlegt. An der darauf nachfolgenden Adresse im Hilfskellerspeicherbereich HKS2 wird dann der Inhalt der dem ersten Datensegment DSEG1 zugeordneten und ebenfalls im Überlappungsbereich UB der beiden Datensegmente hinterlegten Zeigerspeicherzelle ZSP1 gespeichert.

Daraufhin wird eine ebenfalls im Überlappungsbereich UB hinterlegte Schachtelungsindexspeicherzelle UMI ausgelesen und auf ihren Ausgangszustand, der im vorliegenden Fall durch den Nullwert repräsentiert wird, überprüft. Für den Fall, daß die Schachtelungsindexspeicherzelle UMI den Nullwert beinhaltet, was gleichbedeutend damit ist, daß es im ersten Datensegment DSEG1 noch keinen Eintrag im Hilfskellerspeicherbereich HKS1 gibt, und im Hilfskellerspeicherbereich HKS2 des zweiten Datensegmentes DSEG2 zum vorliegenden Zeitpunkt der erste Eintrag vorgenommen wird. Der Nullwert besagt damit, daß die minimale Blockschachtelungstiefe vorliegt, also keine intersegmentären Programmsprünge ausgeführt wurden, die nicht wieder zum Ausgangsprogrammodul zurückgeführt haben.

Für den Fall, daß die Schachtelungsindexspeicherzelle UMI einen höheren Wert aufweist, was gleichbedeutend damit ist, daß das Zielprogrammodul selbst von einem vorhergehenden Zielprogrammodul aufgerufen wird, wobei den Zielprogrammodulen unterschiedliche Datensegmente zugeordnet sind, wird die Adresse der nächsten freien Speicherzelle nach der aktuellen Adresse (SP-2) im Kellerspeichersegment - das durch das Kellerspeichersegmentregister SS noch auf das erste Datensegment DSEG1 eingestellt ist - in die dem ersten Datensegment DSEG1 zugeordnete Zeigerspeicherzelle ZSP1 gespeichert. Anschließend wird der Wert in der Schachtelungsindexspeicherzelle UMI um eine Einheit erhöht. In dem Kellerspeicherbereich HKS2 des zweiten Datensegmentes DSEG2 wird ein Parameterblock in Form von zehn Programmübergabeparametern aus dem durch das Kellerspeichersegmentregister SS und dem Kellerspeicheraufsatzregister SP adressierten Kellerspeicherbereich (im Falle von UMI =0 ist dies der Kellerspeicher KSP im ersten Datensegment DSEG1, der nicht mit dem Hilfskellerspeicherbereich HKS1 verwechselt werden darf) in den Hilfskellerspeicherbereich HKS2 kopiert. Nachdem der Parameterblock hinterlegt ist, wird die aktuelle Adresse des Hilfskellerspeicherbereiches HKS2, die im Datenaufsatzregister DI gespeichert ist, in das Kellerspeicheraufsatzregister SP übertragen und in dem Kellerspeichersegmentregister SS wird die Adresse des zweiten Datensegmentes DSEG2 hinterlegt. Dadurch wird der Hilfskellerspeicher HKS2 zum Kellerspeicher KSP für das Zielprogrammodul PMo, dessen Adresse nachfolgend durch eine "Call"-Sprunganweisung in das Programmaufsatzregister IP gespeichert wird.

Bei einem Rücksprung aus dem Zielprogrammodul PMo in die Einsteigesteuersequenz E wird zunächst das Kellerspeicheraufsatzregister SP, das im Moment auf die aktuelle Adresse im Hilfskellerspeicherbereich HKS2 des zweiten Datensegmentes DSEG2 zeigt, um die Anzahl der Programmübergabeparameter zurückgeschaltet. Damit zeigt die im Kellerspeicheraufsatzregister SP eingestellte aktuelle Adresse auf den an dritter Stelle im Hilfskellerspeicher HKS2 hinterlegten Inhalt der Zeigerspeicherzelle ZSP1. Dieser an aktueller Stelle im Hilfskellerspeicher HKS2 hinterlegte Wert wird in das Datenaufsatzregister DI übertragen und in die Zeigerspeicherzelle ZSP1 gespeichert. Anschließend wird der im Hilfskellerspeicherbereich HKS2 an zweiter Stelle hinterlegte Wert (Inhalt des Kellerspeicheraufsatzregisters SP) ausgelesen und in das Kellerspeicheraufsatzregister SP übertragen. Der an erster Stelle im Hilfskellerspeicher HKS2 hinterlegte Wert (Inhalt des Kellerspeichersegmentregisters SS) wird in das Kellerspeichersegmentregister SS und in das Datensegmentregister DS kopiert.

Figur 5 soll eine Belegung der Datensegmente DSEG1 und DSEG2 mit jeweiligen Hilfskellerspeicherbereichen HKS1, HKS2 verdeutlichen. Gezeigt ist eine Belegungssituation, wie sie vorliegt, wenn von einem im ersten Programmsegment SEG1 zugeordneten Ausgangsprogrammodul PMn, dem das erste Datensegment DSEG1 zugeordnet ist, eine Sprunganweisung zu einem Zielprogrammodul PMo im zweiten Programmsegment SEG2, dem das zweite Datensegment DSEG2 zugeordnet ist, ausgeführt wurde, und in diesem Zielprogrammodul PMo wieder eine Sprunganweisung zu einem zweiten Zielprogrammodul im ersten Programmsegment SEG1 und von diesem wieder eine Sprunganweisung zu einem dritten Zielprogrammodul im zweiten Programmsegment SEG2 ausgeführt wurde, die noch nicht zu einem Rücksprung geführt haben.

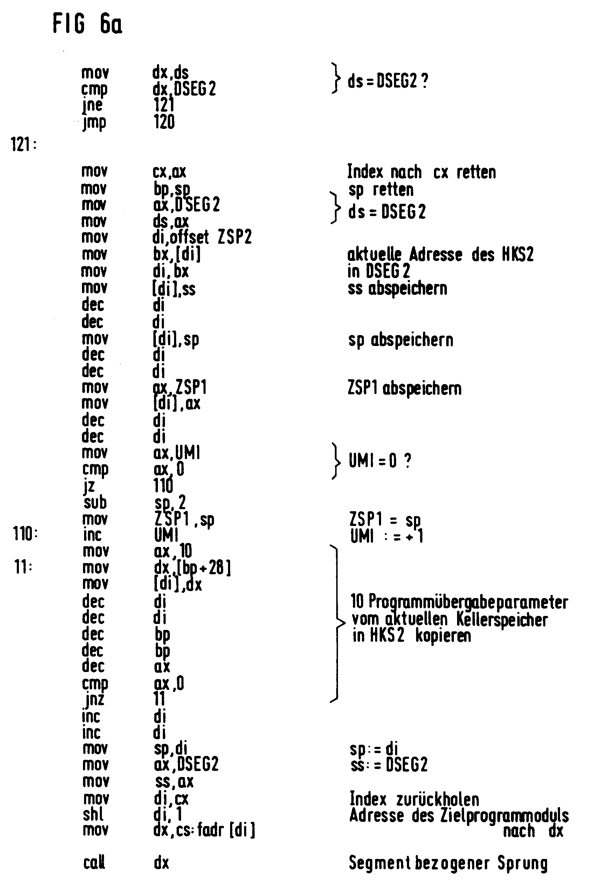

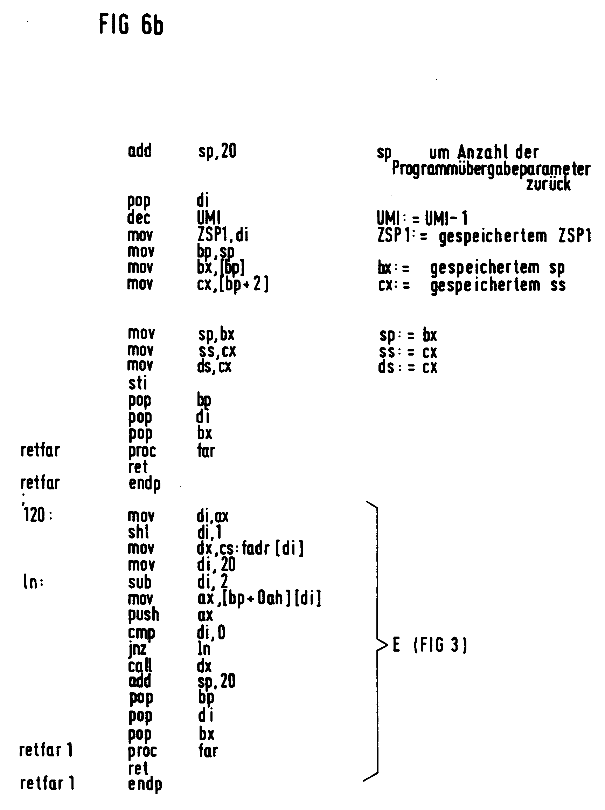

In Figur 6 ist ein Assemblerlisting für die Einsteigesteuersequenz E im zweiten Datensegment DSEG2 angegeben, das für den Fachmann selbsterklärend sein sollte.

Da im vorhergehenden nur die Einsteigesteuersequenz E des zweiten Programmsegmentes SEG2 näher behandelt wurde, sei noch einmal darauf hingewiesen, daß sich die Einsteigesteuersequenz im ersten Programmsegment SEG1 von der erläuterten lediglich dadurch unterscheidet, daß anstelle der Adresse des zweiten Datensegmentes DSEG2 die des ersten Datensegmentes DSEG1 tritt, und die jeweils andere Zeigerspeicherzelle ZSP1, bzw. ZSP2 angesprochen wird.

## Patentansprüche

1. Verfahren zur Steuerung einer Prozessoreinrichtung (PR), in der für eine Programmcodeadressierung eine segmentorientierte physikalische Adressenbildung mittels einer additiven Verknüpfung von in einem Programm-Segmentregister (CS) und wenigstens einem Programmaufsatzregister (IP) gespeicherten Adreßwerten implementiert ist, zur Abarbeitung eines aus einer Vielzahl von Programmodulen unter Verwendung einer Kompilier- und Bindeeinrichtung zusammengesetzten Systemprogrammes,
- bei dem eine erste Anzahl von Programmodulen (PM1, ..., PMn) in einem ersten Programmsegment (SEG1) und eine zweite Anzahl von Programmodulen (PMm, PMo) wenigstens in einem zweiten Programmsegment (SEG2) eines von der Prozessoreinrichtung adressierbaren Speichers (ASP) gespeichert sind,
- bei dem die Programmodule aufgrund einer 'NAH'-Einstellung bei der Kompilierung nur segmentbezogene Sprunganweisungen aufweisen, bei deren Ausführung der Inhalt des Programm-Segmentregisters (CS) unverändert belassen wird und
- bei dem für Programmsprünge aus im ersten Programmsegment (SEG1) gespeicherten Programmodulen (PM1, ..., PMn) zu außerhalb des ersten Programmsegmentes (SEG1) gespeicherten Zielprogrammodulen (..., PMo, ...) bei Ausführung der betreffenden Sprunganweisungen im Programm-Aufsatzregister (IP) eine die Adresse (ADo) des jeweiligen Zielprogrammodules (PMo) im ersten Programmsegment (SEG1) repräsentierende Zieladresse (ADo) eingestellt wird, an der im adressierbaren Speicher (ASp) eine Umsteigesteuersequenz (U) gespeichert ist,
- - die eine 'FERN'-Sprunganweisung aufweist, bei deren Ausführung im Programm-Segmentregister (CS) die Adresse (S2ADR) des, das Zielprogrammodul (PMo) beinhaltenden Programmsegmentes (SEG2) und im Programm-Aufsatzregister (IP) die Adresse (EIN) einer Einsteigesteuersequenz (E) eingestellt wird,
- - - die eine segmentbezogene Sprunganweisung aufweist, bei deren Ausführung im Programm-Aufsatzregister (IP) die Adresse (ADo) des Zielprogrammodules (PMo) eingestellt wird.

2. Verfahren nach Anspruch 1, **dadurch gekennzeichnet**, daß für eine Abarbeitung des Systemprogrammes mit Programmodulen, die zu jeweils anderen Programmodulen des Systemprogramms Sprunganweisungen aufweisen, bei deren Ausführung jeweils eine Rücksprungadresse (a+y) in einem Kellerspeicherbereich (Stack) der Prozessoreinrichtung (PR) abgespeichert wird und die am Programmodulende jeweils eine Rücksprunganweisung (RET) aufweisen, bei deren Ausführung die Rücksprungadresse (a+y) aus dem Kellerspeicherbereich ausgelesen und in das Programm-Aufsatzregister (IP) gespeichert wird, die Einsteigesteuersequenz (E) eine 'fern'-Rücksprunganweisung (RETFAR) aufweist, bei deren Ausführung aus dem Kellerspeicherbereich die Rücksprungadresse (a+y) ausgelesen und in das Programm-Aufsatzregister (IP) gespeichert wird und ein von der Umsteigesteuersequenz (U) in den Kellerspeicherbereich hinterlegter, das erste Programmsegment (SEG1) bezeichnende Adreßwert (S1ADR) ausgelesen und in das Programm-Segmentregister (CS) gespeichert wird.

3. Verfahren nach Anspruch 1 oder 2, **dadurch gekennzeichnet**, daß in der Umsteigesteuersequenz (U) einer jeweiligen repräsentierenden Zieladresse ein individueller Index zugeordnet wird, der in der Einsteigesteuersequenz (E) als Zeiger auf eine Tabelle mit Adressen von Zielprogrammodulen dient.

4. Verfahren nach einem der Ansprüche 1 bis 3, **dadurch gekennzeichnet**, daß zur Steuerung einer Prozessoreinrichtung (PR), in der für eine Datenspeicher- und Kellerspeicheradressierung eine segmentorientierte physikalische Adressenbildung mittels additiver Verknüpfung von in einem Daten-Segmentregister (DS) bzw. Kellerspeicher-Segmentregister (SS) und wenigstens einem Daten-Aufsatzregister bzw. Kellerspeicher-Aufsatzregister (SP, BP) gespeicherten Adreßwerten implementiert ist, den Programmodulen eines jeden Programmsegmentes (SEG1, SEG2) ein gemeinsames Datensegment (DSEG1, DSEG2) zur Hinterlegung von im wesentlichen Programmdaten, und ein gemeinsames Kellerspeichersegment zur Zwischenspeicherung von Steuer- und Programmodulübergabe-Parametern im adressierbaren Speicher (ASP) zugeordnet sind,
daß die Einsteigesteuersequenz (E) eingangs eine Abfrage aufweist, mit der ermittelt wird, ob der im Daten-Segmentregister (DS) gespeicherte Adreßwert mit der Adresse des dem Zielprogrammodul (PMo) zugeordneten Datensegmentes (DSEG2) übereinstimmt,
daß im Falle einer fehlenden Übereinstimmung nachfolgende Verfahrensschritte vor Durchführung der segmentbezogenen Sprunganweisung ausgeführt werden:
- der Adreßwert des dem Zielprogrammodul zugeordneten Datensegmentes wird in das Datensegmentregister (DS) gespeichert, und aus dem dadurch bezeichneten Datensegment (DSEG2) wird eine zur Hinterlegung der aktuellen Adresse eines im selben Datensegment (DSEG2) freigehaltenen Hilfskellerspeicherbereiches (HKS2) dienende Zeigerspeicherzelle (ZSP2) gelesen,
- in den Hilfskellerspeicherbereich (HKS2) werden dann zunächst wenigstens der im Kellerspeicher-Segmentregister (SS) gespeicherte Adreßwert, der im Kellerspeicher-Aufsatzregister (SP) als Zeiger auf die aktuelle Adresse im Kellerspeichersegment dienende Adreßwert und der Inhalt der in dem, dem jeweiligen Ausgangsprogrammodul (PMn) zugeordneten Datensegment (DSEG1) gespeicherten Zeigerspeicherzelle (ZSP1) übertragen,
- danach wird ein Parameterblock von im Kellerspeichersegment an aktueller Adresse hinterlegten Programmübergabeparametern in den Hilfskellerspeicherbereich (HKS2) kopiert,
- anschließend werden die aktuelle Adresse des Hilfskellerspeichers (HKS2) im Datensegment (DSEG2) in das Kellerspeicher-Aufsatzregister (SP), und der Adreßwert des Daten-Segmentregisters (DS) in das Kellerspeicher-Segmentregister (SS) gespeichert.

5. Verfahren nach Anspruch 4, **dadurch gekennzeichnet**,
daß in den Datensegmenten (DSEG1,DSEG2) jeweils eine Schachtelungsindexspeicherzelle (UMI) vorgesehen ist, in der im Falle von Mehrfachverschachtelungen ein Schachtelungstiefenwert hinterlegt wird.

6. Verfahren nach Anspruch 4 oder 5, mit zwei Datensegmenten, (DSEG1, DSEG2), von denen ein erstes den Programmodulen (PM1,..,PMn) des ersten Programmsegmentes (SEG1) und ein zweites den Programmodulen (PMm,PMo) des zweiten Programmsegmentes (SEG2) zugeordnet ist, **dadurch gekennzeichnet**,
daß die beiden Datensegmente (DSEG1, DSEG2) einen Überlappungsbereich (UB) aufweisen, in dem die den Datensegmenten (DSEG1, DSEG2) zugeordneten Zeigerspeicherzellen (ZSP1, ZSP2) und eine gemeinsame Schachtelungsindexspeicherzelle (UMI) angeordnet ist,
daß in der Einsteigesteuersequenz (E) vor Übertragung des Parameterblocks und nach Speicherung des Inhalts der betreffenden Zeigerspeicherzelle (ZSP1) in den Hilfskellerspeicherbereich (HKS2) der Inhalt der Schachtelungsindexspeicherzelle (UMI) hinsichtlich eines Abweichens von ihrem Ausgangswert überprüft wird, der nur bei minimaler Blockschachtelungstiefe vorliegt und daß bei einem Abweichen vom Ausgangswert der im Kellerspeicher-Aufsatzregister (SP) gespeicherte Adreßwert in die Zeigerspeicherzelle (ZSP1) des dem Ausgangsprogrammodul (PMn) zugeordneten Datensegmentes (DSEG1) gespeichert wird, bevor der Inhalt der Schachtelungindexspeicherzelle (UMI) um eine Einheit weitergeschaltet wird.

7. Verfahren nach einem der Ansprüche 2 bis 6, **dadurch gekennzeichnet**, daß nach dem segmentbezogenen Rücksprung aus dem Zielprogrammodul (PMo) die Einsteigesteuersequenz (E) Anweisungen enthält, wonach die im Kellerspeicheraufsatzregister (SP) gespeicherte aktuelle Adresse um die Anzahl der Programmübergabeparameter verändert wird,
daß der vor dem Parameterblock im Hilfskellerspeicherbereich (HKS2) hinterlegte Inhalt der Zeigerspeicherzelle (ZSP1) in die Zeigerspeicherzelle (ZSP1) des dem Ausgangsprogrammodul (PMn) zugeordneten Datensegmentes (DSEG1) gespeichert wird, und
daß die im Hilfskellerspeicherbereich (HKS2) an erster und zweiter Stelle hinterlegten Adreßwerte ihrer Bedeutung bei der Einspeicherung entsprechend in das Kellerspeicher-Aufsatzregister (SP) bzw. in das Daten- und Kellerspeichersegmentregister (DS, SS) gespeichert werden.

8. Programmgesteuerte Einrichtung, insbesondere Telefonnebenstellenanlage mit einer gemäß dem Verfahren nach einem der Ansprüche 1 bis 7 gesteuerten Prozessoreinrichtung.

## Claims

1. Method for controlling a processor device (PR), in which, for program code addressing, segment-oriented physical address formation by means of additive combination of address values stored in a program segment register (CS) and at least one program attachment register (IP) is implemented, for the processing of a system program assembled from a multiplicity of program modules using a compiling and linking device,
- in which a first number of program modules (PM1, ..., Pmn) are stored in a first program segment (SEG1) and a second number of program modules (PMm, PMo) are stored at least in a second program segment (SEG2) of a memory (ASP) that can be addressed by the processor device,
- in which the program modules have only segment-related jump instructions on account of a 'NEAR' setting during compilation, during the execution of which jump instructions the content of the program segment register (CS) is left unchanged, and
- in which, for program jumps from program modules (PM1, ..., PMn,) stored in the first program segment (SEG1) to destination program modules (..., PMo, ...) stored outside the first program segment (SEG1), during the execution of the relevant jump instructions, in the program attachment register (IP), a destination address (ADo) representing the address (ADo) of the respective destination program module (PMo) in the first program segment (SEG1) is set, at which destination address a move control sequence (U) is stored in the addressable memory (ASp),
-- which sequence has a "FAR" jump instruction, during the execution of which, in the program segment register (CS), the address (S2ADR) of the program segment (SEG2) comprising the destination program module (PMo) is set and, in the program attachment register (IP), the address (EIN) of an entry control sequence (E) is set,
--- which has a segment-related jump instruction, during the execution of which, in the program attachment register (IP), the address (ADo) of the destination program module (PMo) is set.

2. Method according to Claim 1, characterized in that, for processing the system program with program modules which have jump instructions to respective other program modules of the system program, during the execution of which jump instructions a return address (a+y) is in each case stored in a stack area (Stack) of the processor device (PR), and which have a return instruction (RET) in each case at the end of the program module, during the execution of which return instruction the return address (a+y) is read from the stack area and stored in the program attachment register (IP), the entry control sequence (E) has a 'far' return instruction (RETFAR), during the execution of which the return address (a+y) is read from the stack area and stored in the program attachment register (IP) and an address value (S1ADR) - stored in the stack area by the move control sequence (U) and designating the first program segment (SEG1) - is read out and stored in the program segment register (CS).

3. Method according to Claim 1 or 2, characterized in that, in the move control sequence (U), a respective representative destination address is assigned an individual index which, in the entry control sequence (E), serves as a pointer to a table with addresses of destination program modules.

4. Method according to one of Claims 1 to 3, characterized
in that, for controlling a processor device (PR), in which, for data memory and stack addressing, segment-oriented physical address formation by means of additive combination of address values stored in a data segment register (DS) and/or stack segment register (SS) and at least one data attachment register and/or stack attachment register (SP, BP) is implemented, the program modules of each program segment (SEG1, SEG2) are assigned a common data segment (DSEG1, DSEG2) for storing essentially program data, and a common stack segment for buffer-storing control and program module transfer parameters in the addressable memory (ASP) in that the entry control sequence (E) has, at the beginning, an interrogation which is used to determine whether the address value stored in the data segment register (DS) corresponds to the address of the data segment (DSEG2) assigned to the destination program module (PMo),
in that, in the event of lack of correspondence, the following method steps are executed before the segment-related jump instruction is carried out:
- the address value of the data segment assigned to the destination program module is stored in the data segment register (DS), and, from the data segment (DSEG2) designated thereby, a pointer memory cell (ZSP2) is read, which pointer memory cell serves for storing the current address of an auxiliary stack area (HKS2) kept free in the same data segment (SEG2),
- then firstly at least the address value stored in the stack segment register (SS), the address value which, in the stack attachment register (SP), serves as a pointer to the current address in the stack segment, and the content of the pointer memory cell (ZSP1) stored in the data segment (DSEG1) assigned to the respective originating program module (PMn) are transferred to the auxiliary stack area (HKS2),
- afterwards, a parameter block of program transfer parameters stored in the stack segment at the current address is copied into the auxiliary stack area (HKS2),
- subsequently, the current address of the auxiliary stack (HKS2) in the data segment (DSEG2) is stored in the stack attachment register (SP), and the address value of the data segment register (DS) is stored in the stack segment register (SS).

5. Method according to Claim 4, characterized in that a nesting index memory cell (UMI) is provided in each of the data segments (DSEG1, DSEG2), a nesting depth value being stored in the said memory cell in the event of multiple nestings.

6. Method according to Claim 4 or 5, with two data segments (DSEG1, DSEG2), a first of which is assigned to the program modules (PM1, .., PMn) of the first program segment (SEG1) and a second of which is assigned to the program modules (PMm, PMo) of the second program segment (SEG2), characterized
in that the two data segments (DSEG1, DSEG2) have an overlap area (UB), in which the pointer memory cells (ZSP1, ZSP2) assigned to the data segments (DSEG1, DSEG2) are arranged and a common nesting index memory cell (UMI) is arranged,
in that, in the entry control sequence (E), prior to the transfer of the parameter block and after the storage of the content of the relevant pointer memory cell (ZSP1) in the auxiliary stack area (HKS2), the content of the nesting index memory cell (UMI) is checked with regard to deviation from its starting value, which is present only in the case of a minimum block nesting depth, and in that, in the case of deviation from the starting value, the address value stored in the stack attachment register (SP) is stored in the pointer memory cell (ZSP1) of the data segment (DSEG1) assigned to the originating program module (PMn), before the content of the nesting index memory cell (UMI) is advanced by one unit.

7. Method according to one of Claims 2 to 6, characterized
in that, after the segment-related return from the destination program module (PMo), the entry control sequence (E) contains instructions according to which the current address stored in the stack attachment register (SP) is altered by the number of program transfer parameters,
in that the content of the pointer memory cell (ZSP1) that was stored before the parameter block in the auxiliary stack area (HKS2) is stored in the pointer memory cell (ZSP1) of the data segment (DSEG1) assigned to the originating program module (PMn), and
in that the address values stored at the first and second locations in the auxiliary stack area (HKS2) are stored, in accordance with their significance during storage, in the stack attachment register (SP) and in the data and stack segment register (DS, SS) respectively.

8. Program-controlled device, in particular telephone private branch exchange, with a processor device controlled in accordance with the method according to one of Claims 1 to 7.

## Revendications

1. Procédé pour la commande d'un arrangement de processeurs (PR) dans lequel, en vue de l'adressage d'un code programme, une génération d'adresse physique orientée segment est mise en oeuvre à l'aide d'un lien additif de valeurs d'adresse stockées dans un registre de segment de programme (CS) et dans au moins un registre de reprise de programme (IP), pour l'exécution d'un programme système composé d'une pluralité de modules de programme en utilisant un dispositif de compilation et d'édition de liens,
- dans lequel un premier nombre de modules de programme (PM1, . . ., PMn) est stocké dans un premier segment de programme (SEG1) et un second nombre de modules de programme (PMm, PMo) au moins dans un second segment de programme (SEG2) d'une mémoire adressable (ASP) par l'arrangement de processeurs,
- dans lequel, en raison d'un réglage 'PROCHE' lors de la compilation, les modules de programme ne présentent que des instructions de saut relatives au segment, à l'exécution desquelles le contenu du registre de segment de programme (CS) reste inchangé, et
- dans lequel, pour des sauts de programme de modules de programme (PM1, . . ., PMn) stockés dans le premier segment de programme (SEG1) à des modules de programme cible (. . ., PMo, . . .) stockés en dehors du premier segment de programme (SEG1), lors de l'exécution des instructions de saut concernées, une adresse cible (ADo) représentant l'adresse (ADo) du module de programme cible (Pmo) respectif dans le premier segment de programme (SEG1) est réglée dans le registre de reprise de programme (IP), à laquelle une séquence de commande de changement (U) est stockée dans la mémoire adressable (ASP),
- - laquelle présente une instruction de saut 'LOIN', à l'exécution de laquelle est réglée dans le registre de segment de programme (CS), l'adresse (S2ADR) du segment de programme (SEG2) contenant le module de programme cible (PMo) et dans le registre de reprise de programme (IP), l'adresse (EIN) d'une séquence de commande d'entrée (E),
--- laquelle présente une instruction de saut relative au segment, à l'exécution de laquelle l'adresse (ADo) du module de programme cible (PMo) est réglée dans le registre de reprise de programme (IP).

2. Procédé selon la revendication 1, caractérisé en ce que, pour une exécution du programme système avec des modules de programme présentant des instructions de saut à d'autres modules de programme du programme système, à l'exécution desquelles à chaque fois une adresse de retour (a+y) est enregistrée dans une zone de pile (stack) de l'arrangement de processeurs (PR), et présentant en fin de module de programme à chaque fois une instruction de retour (RET) à l'exécution de laquelle l'adresse de retour (a+y) est extraite de la zone de pile et enregistrée dans le registre de reprise de programme (IP), la séquence de commande d'entrée (E) présente une instruction de retour 'loin' (RETFAR) à l'exécution de laquelle l'adresse de retour (a+y) est extraite de la zone de pile et enregistrée dans le registre de reprise de programme (IP) et une valeur d'adresse (S1ADR) déposée par la séquence de commande de changement (U) dans la zone de pile et désignant le premier segment de programme (SEG1) est extraite et enregistrée dans le registre de segment de programme (CS).

3. Procédé selon la revendication 1 ou 2, caractérisé en ce que dans la séquence de commande de changement (U), une adresse cible représentative respective se voit attribuer un index individuel servant dans la séquence de commande d'entrée (E) de pointeur sur une table contenant des adresses de modules de programme cible.

4. Procédé selon l'une des revendications 1 à 3, caractérisé
en ce que pour la commande d'un arrangement de processeurs (PR) dans lequel, en vue de l'adressage d'une mémoire de données et d'une mémoire pile, une génération d'adresse physique orientée segment est mise en oeuvre à l'aide d'un lien additif de valeurs d'adresse stockées dans un registre de segment de données (DS) resp. un registre de segment de pile (SS) et dans au moins un registre de reprise de données resp. un registre de reprise de pile (SP, BP), les modules de programme de chaque segment de programme (SEG1, SEG2) se voient attribuer un segment de données commun (DSEG1, DSEG2) pour le dépôt de données de programme essentiellement et un segment de pile commun pour le stockage intermédiaire de paramètres de commande et de transfert de modules de programme dans la mémoire adressable (ASP),
en ce que la séquence de commande d'entrée (E) présente, côté entrée, une interrogation à l'aide de laquelle est déterminé si la valeur d'adresse stockée dans le registre de segment de données (DS) correspond à l'adresse du segment de données (DSEG2) attribué au module de programme cible (PMo), en ce qu'en absence d'une correspondance, les étapes suivantes sont effectuées avant l'exécution de l'instruction de saut relative au segment :
- la valeur d'adresse du segment de données attribué au module de programme cible est enregistrée dans le registre de segment de données (DS), et, du segment de données (DSEG2) ainsi désigné, est extraite une cellule de mémoire de pointeur (ZSP2) servant à déposer l'adresse actuelle d'une zone de pile auxiliaire (HKS2) réservée dans le même segment de données (DSEG2),
- dans la zone de pile auxiliaire (HKS2) sont alors transférés d'abord au moins la valeur d'adresse stockée dans le registre de segment de pile (SS), la valeur d'adresse servant dans le registre de reprise de pile (SP) de pointeur sur l'adresse actuelle dans le segment de pile et le contenu de la cellule de mémoire de pointeur (ZSP1) stockée dans le segment de données (DSEG1) attribué au module de programme de sortie (PMn) respectif,
- puis un bloc de paramètres de paramètres de transfert de programme déposés dans le segment de pile à l'adresse actuelle est copié dans la zone de pile auxiliaire (HKS2),
- ensuite l'adresse actuelle de la pile auxiliaire (HKS2) dans le segment de données (DSEG2) est enregistrée dans le registre de reprise de pile (SP) et la valeur d'adresse du registre de segment de données (DS) dans le registre de segment de pile (SS).

5. Procédé selon la revendication 4, caractérisé en ce que respectivement une cellule de mémoire d'index d'emboîtement (UMI) est prévue dans les segments de données (DSEG1, DSEG2), dans laquelle, en cas d'emboîtements multiples, une valeur de niveau d'emboîtement est déposée.

6. Procédé selon la revendication 4 ou 5, avec deux segments de données (DSEG1, DSEG2) dont un premier est attribué aux modules de programme (PM1, . . ., PMn) du premier segment de programme (SEG1) et un second aux modules de programme (PMm, PMo) du second segment de programme (SEG2), caractérisé en ce que les deux segments de programme (DSEG1, DSEG2) présentent une zone de recouvrement (UB) dans laquelle sont placées les cellules de mémoire de pointeur (ZSP1, ZSP2) attribuées aux segments de données (DSEG1, DSEG2) et une cellule de mémoire d'index d'emboîtement (UMI) commune,
en ce que dans la séquence de commande d'entrée (E), avant le transfert du bloc de paramètres et après l'enregistrement du contenu de la cellule de mémoire de pointeur (ZSP1) dans la zone de pile auxiliaire (HKS2), le contenu de la cellule de mémoire d'index d'emboîtement (UMI) est vérifié quant à un écart par rapport à sa valeur de sortie, qui n'existe qu'en cas de niveau d'emboîtement minimal des blocs, et qu'en présence d'un écart par rapport à la valeur de sortie, la valeur d'adresse stockée dans le registre de reprise de pile (SP) est enregistrée dans la cellule de mémoire de pointeur (ZSP1) du segment de données (DSEG1) attribué au module de programme de sortie (PMn) avant que le contenu de la cellule de mémoire d'index d'emboîtement (UMI) ne soit commuté d'une unité.

7. Procédé selon l'une des revendications 2 à 6, caractérisé
en ce qu'après le retour relatif au segment du module de programme cible (PMo), la séquence de commande d'entrée (E) contient des instructions selon lesquelles l'adresse actuelle stockée dans le registre de reprise de pile (SP) est modifiée du nombre de paramètres de transfert de programme,
en ce que le contenu de la cellule de mémoire de pointeur (ZSP1) déposé avant le bloc de paramètres dans la zone de pile auxiliaire (HKS2) est enregistré dans la cellule de mémoire de pointeur (ZSP1) du segment de données (DSEG1) attribué au module de programme de sortie (PMn), et
en ce que les valeurs d'adresse déposées en première et seconde position dans la zone de pile auxiliaire (HKS2) sont enregistrées dans le registre de reprise de pile (SP) resp. dans le registre de segment de données et de pile (DS, SS) en fonction de leur signification au moment de l'enregistrement.

8. Dispositif commandé par programme, en particulier installation de postes téléphoniques supplémentaires dotée d'un agencement de processeurs commandé conformément au procédé selon l'une des revendications 1 à 7.
